# EUROPEAN PATENT APPLICATION

(11) **EP 4 480 645 A1**
(43) Date of publication of application: **25.12.2024**
(21) Application number: 22926127.6
(22) Date of filing: 28.12.2022
(51) Int. Cl.: B25J 9/16, B25J 9/06, G01G 17/00, G01G 19/387

(54) **ROBOT, AND ELONGATED MEMBER PICK-UP SYSTEM PROVIDED WITH SAME**

(30) Priority: 14.02.2022 JP 2022020894
(71) Applicant: RT Corporation, Tokyo 101-0021 (JP)
(72) Inventor: NOMURA, Hiroyuki, Tokyo 101-0021 (JP); SHIOTANI, Masayuki, Tokyo 101-0021 (JP); ISHIKAWA, Shinya, Tokyo 101-0021 (JP); TSUGAWA, Hisashi, Akashi-Shi, Hyogo 673-8688 (JP); OKABE, Shuichi, Akashi-Shi, Hyogo 673-8688 (JP); SHIMIZU, Ryo, Akashi-Shi, Hyogo 673-8688 (JP)
(74) Representative: Mewburn Ellis LLP
(86) International application number: PCT/JP2022/048648
(87) International publication number: WO 2023/153113

(57) **Abstract**

A robot according to the present invention is configured to grasp an elongate member, and the robot includes: a robot body; at least one arm member movable with respect to the robot body; and a control unit that controls a movement of the arm member, wherein the arm member includes: a grasping unit that grasps the elongate member; and an arm body that supports the grasping unit, the arm body having a plurality of joints, the grasping unit includes: a support portion disposed at a distal end of the arm body, the support portion being rotatable about a rotation axis; and a pair of grasping members attached to the support portion, the grasping members being movable closer to and away from each other with the rotation axis interposed therebetween, and the control unit causes the robot to execute: a grasping step for inserting the grasping members into a lamination of the elongate members that have been stored, and for grasping the elongate member; a lifting step for lifting the grasping unit in a state in which the elongated member is grasped by the grasping members; and a first rotation step for rotating the grasping unit by a prescribed angle in a first direction about the rotation axis either during or after the lifting step.

## Description

### Technical Field

The present invention relates to a robot configured to grip an elongate member and an elongate member pick-up system having the same.

### Background Art

PTL 1 discloses a robot that picks up a noodle product by tongs provided at a distal end of the arm member, and places the noodle product on a measuring tray.

### Citation List

### Patent Literature

PTL 1: Japanese Patent No. 6680387

### Summary of Invention

### Technical Problem

Since a noodle product is elongated and easily entangled, there is a case in which some noodle products are grasped by the tongs, and other noodle products are entangled and hanging from the tongs. In such a case, the entangled noodle products may fall off in the process of moving the tongs to a tray, and a predetermined amount of noodle products may not be placed on the tray. In addition, there is also a possibility that a space between the robot and the tray is contaminated with the dropped noodle products. Such a problem may occur not only when a noodle product is picked up but also when an elongate elongate member is picked up.

The present invention has been made to solve the above problems, and an object of the present invention is to provide a robot configured to grasp an elongated member and capable of suppressing the elongated member from falling when the elongated member is picked up and moved, and an elongate member pick-up system including the robot.

### Solution to Problem

A robot according to the present invention is configured to grasp an elongate member, and the robot includes: a robot body; at least one arm member movable with respect to the robot body; and a control unit that controls a movement of the arm member, wherein the arm member includes: a grasping unit that grasps the elongate member; and an arm body that supports the grasping unit, the arm body having a plurality of joints, the grasping unit includes: a support portion disposed at a distal end of the arm body, the support portion being rotatable about a rotation axis; and a pair of grasping members attached to the support portion, the grasping members being movable closer to and away from each other with the rotation axis interposed therebetween, and the control unit causes the robot to execute: a grasping step for inserting the grasping members into a lamination of the elongate members that have been stored, and for grasping the elongate member; a lifting step for lifting the grasping unit in a state in which the elongated member is grasped by the grasping members; and a first rotation step for rotating the grasping unit by a prescribed angle in a first direction about the rotation axis either during or after the lifting step.

In the above robot, the control unit may cause the robot to execute: a second rotation step for rotating the grasping unit by a prescribed angle in a second direction about the rotation axis after the first rotation step, the second rotation direction being opposite to the first direction.

In the above robot, the control unit may cause the robot to execute: a vertical movement step for causing the grasping unit to reciprocate at least once in a vertical direction after the lifting step.

In the above robot, in the vertical movement step, the grasping members may be disposed at a position higher than an initial position during when the grasping unit is lifted after being lowered from the initial position.

In the above robot, the first rotation step may be carried out in a state where a posture of the grasping unit is held such that the rotation axis is inclined with respect to a horizontal direction.

The above robot may further include: a step for driving the arm body, in a state where the elongated member is grasped by the grasping members, to move the grasping unit to a predetermined position, and then releasing the grasping state by the grasping members.

An elongate member pick-up system according to the present invention includes: the robot that releases the grasping state as described above; and a measuring device, wherein the measuring device includes at least one measuring conveyor having the predetermined position, the measuring conveyer is driven and the elongate member is conveyed when a weight of the elongate member placed at the predetermined position of the measuring conveyer is in a predetermined range.

### Advantageous Effects of Invention

According to the present invention, it is possible suppress the elongated member from falling when the elongated member is picked up and moved.

### Brief Description of Drawings

[Fig. 1] Fig. 1 is a plan view of a pick-up system according to an embodiment of the present invention.
[Fig. 2] Fig. 2 is a front view of Fig. 1.
[Fig. 3] Fig. 3 is a side view of Fig. 1.
[Fig. 4] Fig. 4 is a perspective view of Fig. 1.
[Fig. 5] Fig. 5 is a perspective view illustrating a certain posture of a first robot according to the embodiment of the present invention.
[Fig. 6] Fig. 6 is a front view illustrating a certain posture of the first robot.
[Fig. 7] Fig. 7 is a perspective view of an end effector.
[Fig. 8] Fig. 8 is a view schematically illustrating a first arm member.
[Fig. 9] Fig. 9 is a plan view showing a preliminary operation by the first arm member.
[Fig. 10] Fig. 10 is a perspective view illustrating a pickup operation of noodle products by the first arm member.
[Fig. 11] Fig. 11 is a perspective view illustrating the pickup operation of the noodle products by the first arm member.
[Fig. 12] Fig. 12 is a perspective view illustrating the pickup operation of the noodle products by the first arm member.
[Fig. 13] Fig. 13 is a front view illustrating a state before a first rotation operation by the first arm member.
[Fig. 14] Fig. 14 is a front view illustrating the first rotation operation by the first arm member.
[Fig. 15] Fig. 15 is a front view illustrating a second rotation operation by the first arm member.
[Fig. 16] Fig. 16 is a front view illustrating a vertical movement operation by the first arm member.
[Fig. 17] Fig. 17 is a side view illustrating a placement operation for the noodle products by the first arm member.
[Fig. 18] Fig. 18 is a side view illustrating the placement operation for the noodle products by the first arm member.
[Fig. 19] Fig. 19 is a side view illustrating the placement operation for the noodle products by the first arm member.

### Description of Embodiments

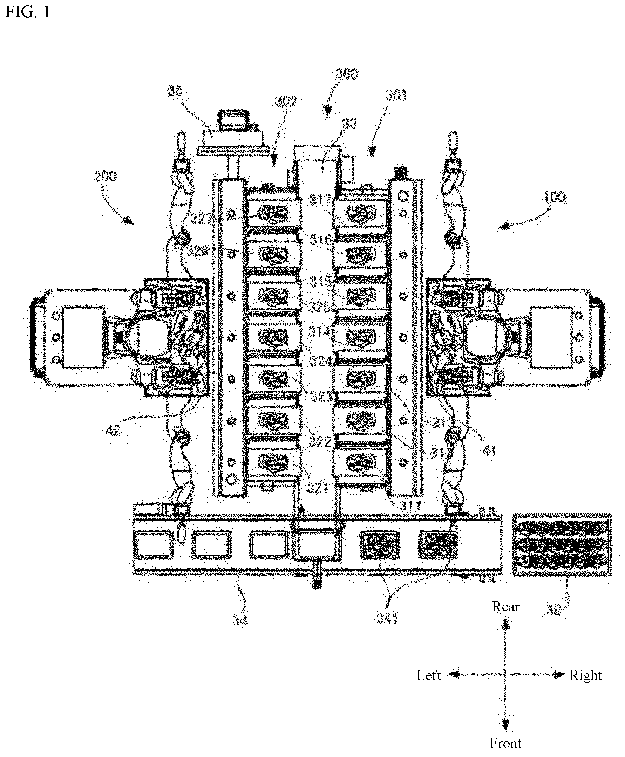

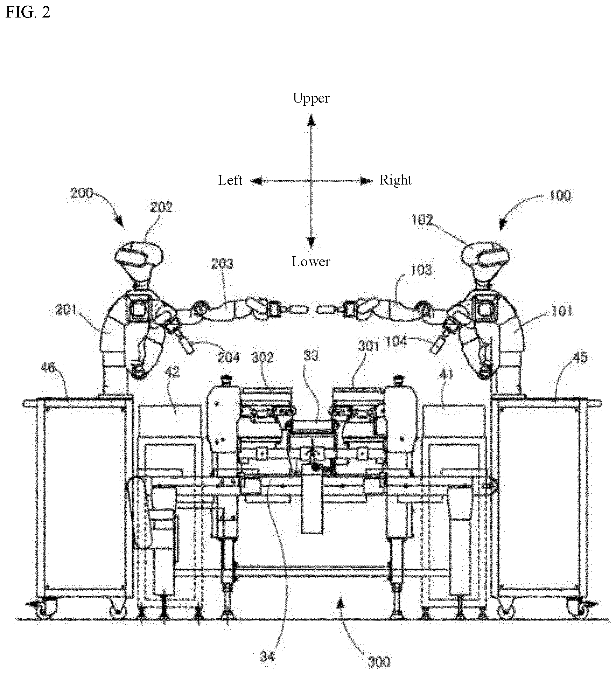

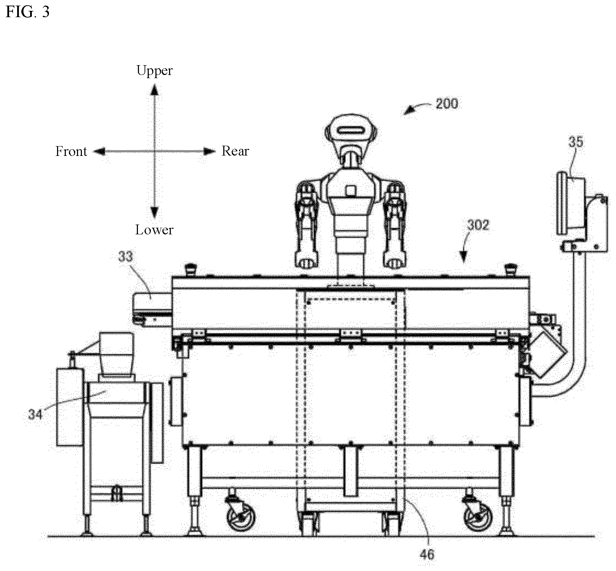

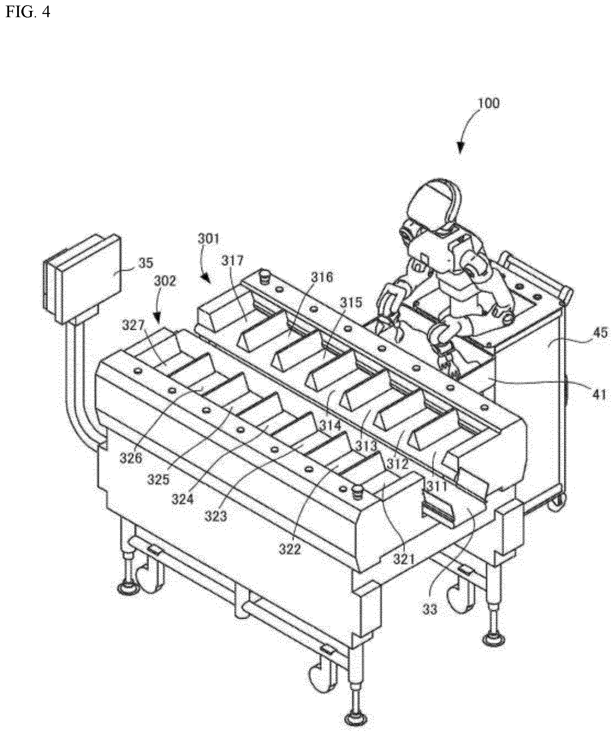

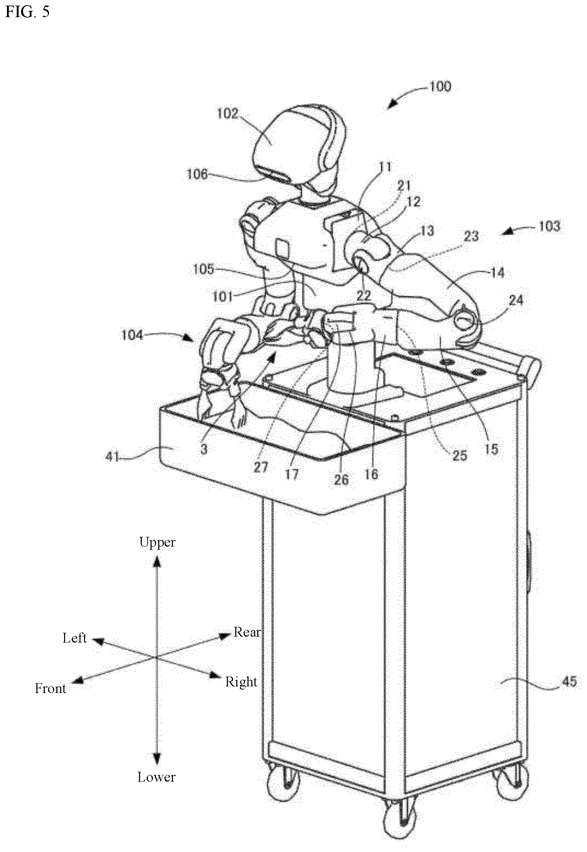

Hereinafter, an embodiment in which an elongate member pick-up system according to the present invention is applied to a pick-up system for a noodle product will be described with reference to the drawings. Examples of the noodle product as used herein include pasta, Japanese wheat noodle, and buckwheat noodle. Fig. 1 is a plan view of a pick-up system according to the present embodiment, Fig. 2 is a side view of Fig. 1, Fig. 3 is a front view of Fig. 1, and Fig. 4 is a perspective view of Fig. 1 (one of the robots is omitted). Hereinafter, a conveyance device will be described in accordance with directions indicated in Figs. 1 to 4. Further, when the robot is described, a description is given in accordance with directions indicated in Fig. 5 to be described later. However, the present invention is not limited to these directions, and the directions can be set in various directions.

As illustrated in Figs. 1 to 4, the pick-up system according to the present embodiment includes a first robot 100, a second robot 200, and a conveyance device 300 for a noodle product N. The conveyance device 300 includes a plurality of measuring conveyors 311-317, 321-327, a first transport conveyor 33 that conveys the noodle product N supplied from the measuring conveyors 311-317, 321-327, and a second transport conveyor 34 that conveys the noodle product N supplied from the first transport conveyor 33. The conveyance device 300 is disposed between the two robots 100, 200. Container members 41, 42 each containing noodle products N are disposed between the robots 100, 200 and the conveyance device 300, respectively. Each of the robots 100, 200 picks up a predetermined amount of noodle product N from the container members 41, 42, and places the noodle product N on one of the measuring conveyors 311-317, 321-327. The noodle product N placed on the measuring conveyors 311-317, 321-327 are supplied to the first transport conveyor 33 and transported, and then transferred to the second transport conveyor 34 and transported. Hereinafter, first, the conveyance device 300 will be described in detail, and then the robots 100, 200 will be described in detail.

### <1. Conveyance device>

As illustrated in Figs. 1 to 4, the conveyance device 300 includes a pair of measuring conveyor groups 301, 302 arranged apart from each other in a left-right direction, and each of the measuring conveyor groups 301, 302 is provided with a plurality of measuring conveyors 311-317, 321-327. The first transport conveyor 33 extending in a front-rear direction is disposed between the measuring conveyor groups 301, 302, and the second transport conveyor 34 extending in a left-right direction is disposed on a front end side of the first transport conveyor 33. Further, an operation display 35 is disposed on a rear end side of the measuring conveyor group 302 on a left side. Movements of these devices is controlled by a control device (not illustrated).

Hereinafter, the measuring conveyor group on a right side of the first transport conveyor 33 will be referred to as a first measuring conveyor group 301, and the measuring conveyor group on a left side will be referred to as a second measuring conveyor group 302. The first robot 100 is disposed on the right side of the first measuring conveyor group 301, and the noodle product N picked up by the first robot 100 is placed on any one of the measuring conveyors 311-317 of the first measuring conveyor group 301. On the other hand, the second robot 200 is disposed on the left side of the second measuring conveyor group 302, and the noodle product N picked up by the second robot 200 is placed on any one of the measuring conveyors 321-327 of the second measuring conveyor group 302. Since the first measuring conveyor group 301 and the second measuring conveyor group 302 are provided symmetrically and have substantially the same configuration, the first measuring conveyor group 301 will be mainly described below.

### <1-1. Measuring conveyor group>

The first measuring conveyor group 301 includes a plurality of measuring conveyors 311-317 arranged in the front-rear direction. In the present embodiment, the seven measuring conveyors 311-317 are provided as an example, but for convenience of description, measuring conveyors arranged from the front to the rear are referred to as the first to seventh measuring conveyors 311-317, respectively. However, since the measuring conveyors 311-317 have substantially the same configuration, the first measuring conveyor 311 will be described below.

The first measuring conveyor 311 is configured by a belt conveyor supported by weight sensors such as load cells. A transport direction of the belt conveyor is the left-right direction, and the placed noodle product N is transported to the first transport conveyor 33 arranged on the left side. In addition, a weight of the noodle product N placed on the noodle product N is measured by the weight sensors, and the measured values (analog weight signal) are converted into digital signals by an A/D converter and transmitted to the control device.

### <1-2. Transport conveyor>

The first transport conveyor 33 configured by a belt conveyor, and transports the noodle product N supplied from the measuring conveyors 311-317, 321-327 forward. Therefore, as illustrated in Fig. 2, the first transport conveyor 33 is positioned down below the measuring conveyor groups 301, 302. At the front end of the first transport conveyor 33, the second transport conveyor 34 extending in the left-right direction is disposed, and the noodle product N conveyed by the first transport conveyor 33 is transferred to the second transport conveyor 34. Therefore, the second transport conveyor 34 is positioned down below the first transport conveyor 33. The second transport conveyor 34 is configured by a belt conveyor, and rotatory moves in the left-right direction. On the belt conveyor, trays 341 are fixed at predetermined intervals in the transport direction. Each of the trays 341 is conveyed to the right side when the tray is on the upper side of the belt conveyor that rotatory moves, and to the left side when the tray is on the lower side of the belt conveyor. That is, each of the trays 341 rotatory moves in the left-right direction together with the belt conveyor. On the right side of the second transport conveyor 34, a collection container 38 is disposed. The noodle product N stored in each of the trays 341 is packed in bags and collected in the collection container 38.

The control device is configured, for example, by a microcontroller or the like, and includes an arithmetic control unit configured by a CPU or the like, and a storage unit configured by memories such as a RAM and a ROM. The storage unit stores various data such as a program for operation and measuring data. Note that the control device may be configured by a single control device that performs centralized control, or may be configured by a plurality of control devices that perform distributed control in cooperation with each other.

The control device controls the conveyance device 300 as a whole by the arithmetic control unit executing the program for operation stored in the storage unit. For example, the measured values measured by the weight sensors are acquired as digital values as needed via the A/D converter, and are stored in the storage unit if necessary. In addition, the control device controls a conveying movement of each of the measuring conveyors 311-317, 321-327 and each of the transport conveyors 33 and 34 via a conveyor drive circuit unit. Further, the control device receives a signal from the operation display 35, and outputs a signal such as data to be displayed on the operation display 35.

The operation display 35 includes, for example, a touch screen type display (display device), and can perform operations such as starting and stopping operation of the conveyance device 300, setting of operation parameters, and the like on the screen of the display. In addition, a result of the operation by the control device (control) can be displayed on the display screen.

### <1-3. Movement of conveyance device>

Next, an example of the movement of the conveyance device 300 configured as described above will be described. In the present embodiment, as will be described later, the robot 100, 200 performs an operation of supplying (placing) the noodle product N as needed to the measuring conveyor 311-317, 321-327 on which the noodle product N is not placed in the conveyance stopped state.

The control device acquires a measured value of each of the weight sensors from the A/D converter at regular time intervals, and recognizes the measuring conveyor 311-317, 321-327 to which the noodle product N is supplied and a weight value of the noodle product N based on the measured value of the weight sensor. Here, when the measuring conveyor 311-317, 321-327 to which the noodle product N is supplied is recognized, the measured value (weight value) is compared with a preset reference range, and if the measured value is within the reference range, it is determined that an appropriate amount of noodle product N has been supplied. In this case, the measuring conveyor 311-317, 321-327 is driven at a predetermined timing to convey the placed noodle product N to the first transport conveyor 33. If the measured value is less than the first reference value and smaller than the reference range, it is determined that the noodle product N is not supplied. In this case, the noodle product N is placed on the measuring conveyor 311-317, 321-327 by the robot 100, 200. If the measured value is greater than or equal to the first reference value and less than the lower limit value of the reference range, it is determined that an amount of the noodle product N to be placed is less than the predetermined amount, and the robot 100, 200 additionally supplies the noodle product N. On the other hand, when the measured value exceeds the reference range, it is determined that an excessive amount of noodle products N is placed, and the robot 100, 200 performs control to remove a part of the placed noodle products N. It is also possible to perform the control of removing the noodle product N by placing a collection lane extending in the front-rear direction between the first measuring conveyor group 301 and the container member 41, that is, on a side opposite of the first transport conveyor 33, and driving the measuring conveyor 311-317 when the measured value of the noodle product N exceeds the reference range to transport the noodle product N to the collection lane.

In the above control, the control device sequentially transmits a result of weighing in each of the measuring conveyors 311-317, 321-327 to the control device of the robots 100, 200. As a result, each of the robots 100, 200 can recognize a measuring conveyor in which an appropriate amount of the noodle product N is placed, a measuring conveyor in which the noodle product N is not placed, a measuring conveyor in which the amount of the noodle product N is insufficient, and a measuring conveyor in which the noodle product N is excessively placed. Therefore, each of the robots 100, 200 can be controlled according to the state of each of the measuring conveyors 311-317, 321-327. For example, each of the robots 100, 200 can detect a nearest measuring conveyor on which the noodle product N is not placed, and place the noodle product N in order from the measuring conveyor.

Next, the control device conveys the noodle product N from each of the measuring conveyors 311-317, 321-327 to the first transport conveyor 33 at a predetermined timing. Since the trays 341 are arranged at predetermined intervals on the second transport conveyor 34 on the downstream side of the first transport conveyor 33, it is necessary to supply the noodle product N from the first transport conveyor 33 to the second transport conveyor 34 at predetermined time intervals. Therefore, the noodle product N need to be placed on the first transport conveyor 33 at predetermined intervals.

For this control, the control device drives the measuring conveyors 311-317, 321-327 on which an appropriate amount of noodle product N in the reference range are placed at predetermined timing, and conveys the noodle product N onto the first transport conveyor 33. Then, the control device places the noodle product N supplied from the measuring conveyors 311-317, 321-327 at the predetermined intervals on the first transport conveyor 33. Therefore, the measuring conveyors 311-317, 321-327 are stopped until the timing defined by the control device even after the appropriate amount of the noodle product N is placed.

The noodle product N supplied to the first transport conveyor 33 is supplied to the tray of the second transport conveyor 34 on the downstream side. Then, the noodle product N in each of the trays 341 is sequentially packed in a bag by, for example, an operator and sequentially collected in the collection container 38 on the right side of the second transport conveyor 34.

### <2. Robot>

The first and second robots 100, 200 used in the present embodiment are the same and are robots imitating the upper body of a human. Each of the robots 100, 200 is disposed on bases 45, 46 adjacent to the container members 41, 42. Since the first and second robots 100, 200 have the same structure, the first robot 100 will be described below.

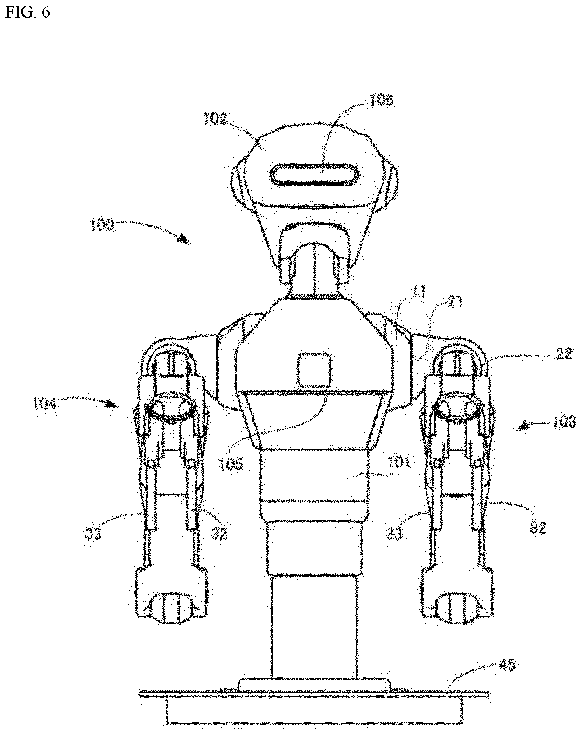

Fig. 5 is a perspective view illustrating a certain posture of the first robot according to the present embodiment, and Fig. 6 is a front view illustrating a certain posture of the first robot.

As illustrated in Figs. 5 and 6, the first robot 100 includes a trunk 101, a head 102, and a pair of arm members 103,104. The head 102 rotatable about an axis in a vertical direction is provided at an upper end portion of the trunk 101. In addition, a first camera 105 that captures an image of a lower side is provided for an upper portion of the trunk 101, and the first camera 105 captures an interior of the container member 41 disposed in front of the first robot 100. That is, the camera 105 captures the noodle product N in the container member 41 and calculates a portion to be picked up. The head 102 is provided with a second camera 106 having the same function as the first camera. Each of the first and second cameras 105,106 may be a digital camera including an image sensor using a charge-coupled device (CCD), a complementary metal oxide semiconductor (CMOS), or the like, or may be an RGB-D camera or the like capable of measuring a depth. The picking up of the noodle product N will be described later. In the present embodiment, the trunk 101 and the head 102 correspond to a robot body of the present invention.

A first arm member 103 is provided on the right side of the trunk 101, and a second arm member 104 is provided on the left side. Since these arm members 103,104 have the same structure and are only different in left-right symmetry, the first arm member 103 will be described below.

### <2-1. Arm member>

The first arm member 103 has a multiple joint having a degrees of freedom of seven axes. The first arm member 103 is a general manipulator, and alternately includes links that are frame members integrally displaced without moving, and joints that connect the links and displace the connected links with a predetermined rotation axis as a reference. In addition, an end effector (grasping unit) 3 is provided at a distal end of the arm member 103.

The first arm member 103 incorporates servomotors in the joints, respectively, and is connected to a control device 108 that controls a rotation angle of each of the servomotors via a signal line. The control device 108 may be built in the first robot 100 or may be externally provided. Furthermore, the control device 108 may be a device that is connected via a communication network such as the Internet or a local area network (LAN) and provides a service on a so-called cloud. The servomotors in the present embodiment may not include a brake, for example.

A material of links 11-17 and the like is not particularly limited, and resin, metal, carbon, or the like can be used. In addition, a molding method is not particularly limited, and may be manufactured by plastic working or injection molding, or may be molded using a 3D printer.

Next, a detailed structure of the first arm member 103 will be described. As illustrated in Figs. 5 and 6, the first arm member 103 includes the seven links 11-17 and seven joints 21-27 connecting the links. Specifically, the first link 11 which is a part (shoulder portion) of the trunk 101, the first joint 21 connected to one end of the first link 11, the second link 12 having one end connected to the first link 11 via the first joint 21, the second joint 22 connected to the other end of the second link 12, the third link 13 having one end connected to the second link 12 via the second joint 22, the third joint 23 connected to the other end of the third link 13, the fourth link 14 having one end connected to the third link 13 via the third joint 23, the fourth joint 24 connected to the other end of the fourth link 14, the fifth link 15 having one end connected to the fourth link 14 via the fourth joint 24, the fifth joint 25 connected to the other end of the fifth link 15, the sixth link 16 having one end connected to the fifth link 15 via the fifth joint 25, the sixth joint 26 connected to the other end of the sixth link 16, the seventh link 17 having one end connected to the sixth link 16 via the sixth joint 26, and the seventh joint 27 connected to the other end of the seventh link 17 are included.

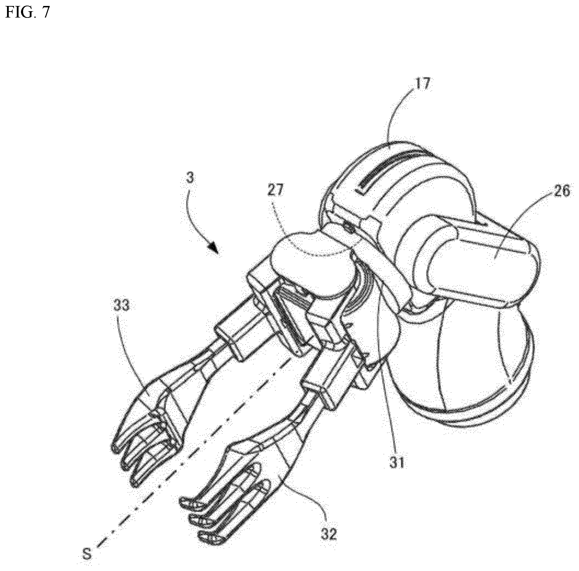

Fig. 7 is a perspective view of the end effector provided at the distal end of the arm member. As illustrated in Fig. 7, the end effector (grasping unit) 3 including a two-finger gripper is provided at a distal end of the seventh joint 27. The seventh joint 27 is a joint rotatable about a rotation axis S extending in the axial direction of the seventh link 17, and the two-finger gripper includes a support portion 31 rotatably coupled to the seventh joint 27 and a pair of grasping members 32, 33 on the support portion 31 with the rotation axis S interposed between the grasping members. End portions of the grasping members 32, 33 are swingably coupled to the support portion 31, and this allows tip portions of the grasping members 32, 33 to move close to and away from each other. Therefore, the noodle product N can be grasped by both the grasping members 32, 33. The grasping members 32, 33 can be swung by a servomotor or the like. In addition, the grasping members 32, 33 can be configured by, for example, tongs that facilitate grasping of the noodle product N. In the arm member, the links and the joints other than the end effector correspond to the arm body of the present invention.

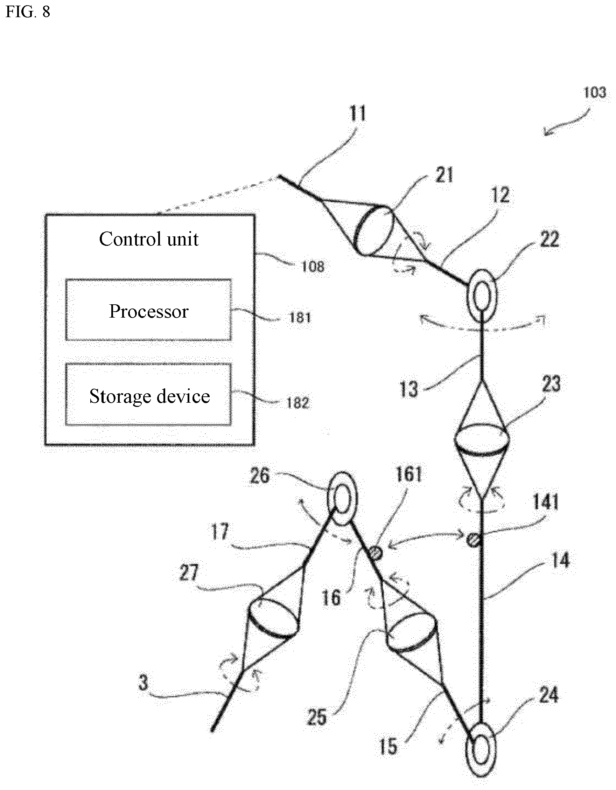

Fig. 8 is a view schematically illustrating the first arm member 103. The first arm member 103 illustrated in Fig. 8 includes the first to seventh links 11-17, the first to seventh joints 21-27 connecting the links, and the end effector 3, and is connected to the control device 108. The fourth link 14 includes a first coupling portion 141, and the sixth link 16 includes a second coupling portion 161. In Fig. 8, the links are each represented by a thick straight line, and the joints are each represented by a double cone or a double circle (ellipse). The double cone represents a joint in which a rotation axis of the motor coincides with a central axis of the link to which the motor is connected, causing the link to be rotationally moved. That is, the joint represented by the double cone rotates the links connected to apexes of the cones about an axis (not illustrated) connecting the apexes of the cones to each other as indicated by the dashed-dotted line arrow. Note that the joint that rotationally moves the connected link is also referred to as a "rotary joint" for convenience. In addition, the double circle represents a joint that does not coincide with the central axis of the links to which a rotation shaft of the motor is connected and causes the links connected to the rotation shaft to perform a turning motion (rotary movement). That is, the joint represented by the double circle turns the links connected to the respective circles about a perpendicular line (not illustrated) passing through the center of the circles as an axis as indicated by an arrow of a two-dot chain line. Note that the joint that turns the connected link is also referred to as a "turning joint" for convenience. As described above, the robot arm according to the present embodiment alternately includes the rotary joints (the joints 21, 23, 25, 27) and the turning joints (the joints 22, 24, 26).

The control device 108 includes a processor 181 and a storage device 182. The processor 181 is an arithmetic processing unit such as a central processing unit (CPU), and controls the movement of the first robot 100 by executing a program. Furthermore, the storage device 182 illustrated in Fig. 8 is a main storage device such as a random access memory (RAM) or a read only memory (ROM), and an auxiliary storage device (secondary storage device) such as a hard disk drive (HDD), a solid state drive (SSD), or a flash memory. The main storage device temporarily stores a program or the like read by the processor, or secures a work area for the processor. The auxiliary storage device stores a program and the like executed by the processor. The processor 181 and the storage device 182 may be a microcontroller incorporating a memory.

### <2-2. Movement of robot>

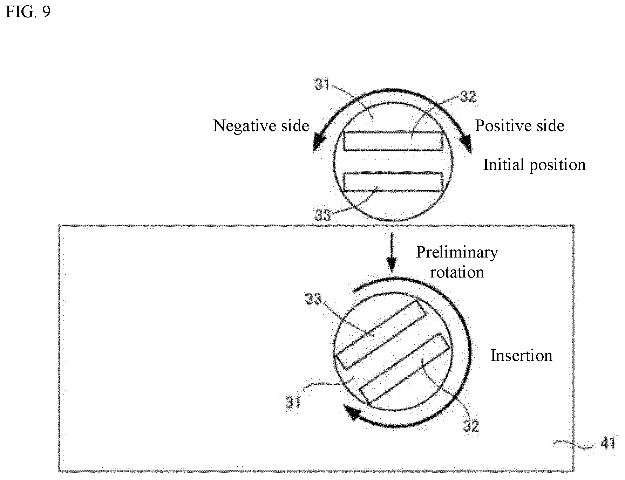

Next, a movement in which the first robot 100 picks up the noodle product N and places the measuring conveyor 311-317 will be described with reference to Figs. 9 to 19. Hereinafter, the operation of picking up the noodle product N from the container member 41 is referred to as a pickup operation, and the operation of moving the noodle product N that has been picked up to the measuring conveyor 311-317 and placing the noodle product N on the measuring conveyor is referred to as a placement operation. In addition, these operations may be collectively referred to as a pickup movement.

In the following pickup movement, the first arm member 103 is operated by driving at least one of the joints 21-27 described above. Therefore, the joint 21-27 to be driven is not particularly limited as long as the first arm member 103 performs the movement described below. Although the movement of the first arm member 103 will be described below, the movement of the second arm member 104 is similar. In the present embodiment, it is assumed that setting is made such that the noodle product N is placed on the fifth to seventh measuring conveyors 315-317 by the first arm member 103, and the noodle product N is placed on the first to fourth measuring conveyors 311-314 by the second arm member 104.

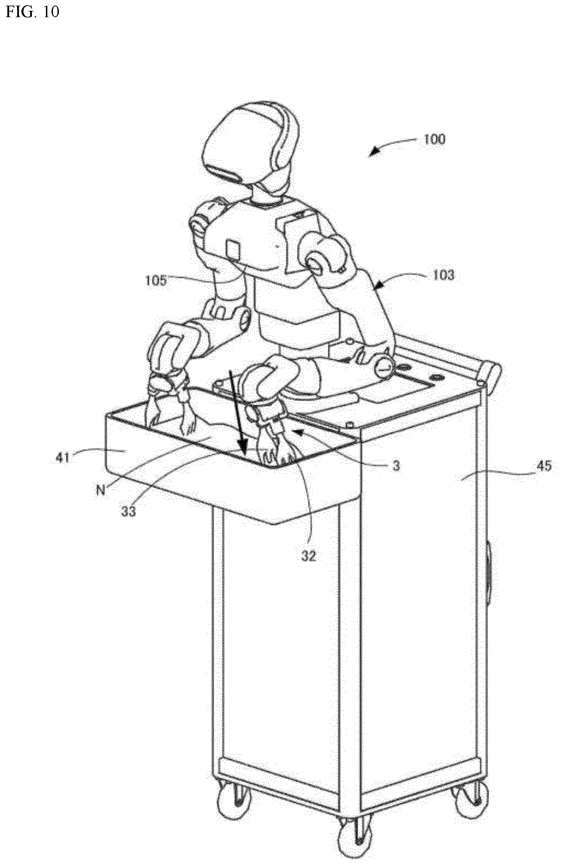

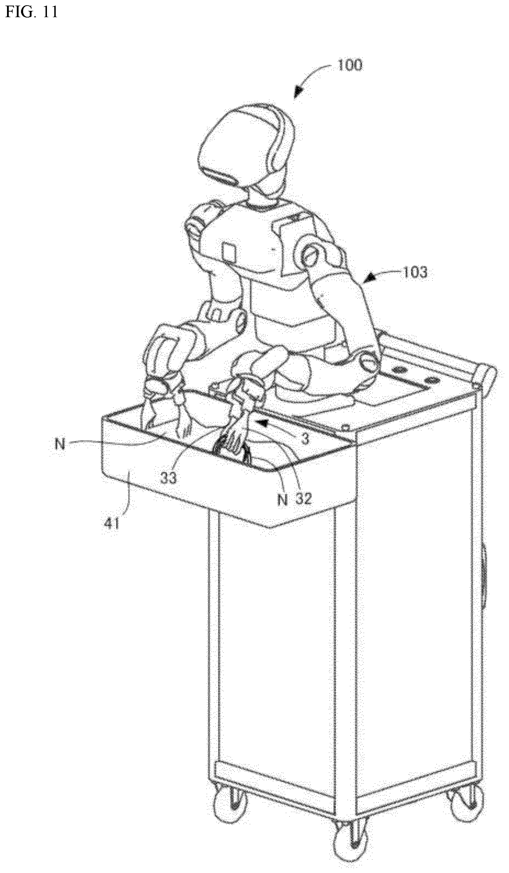

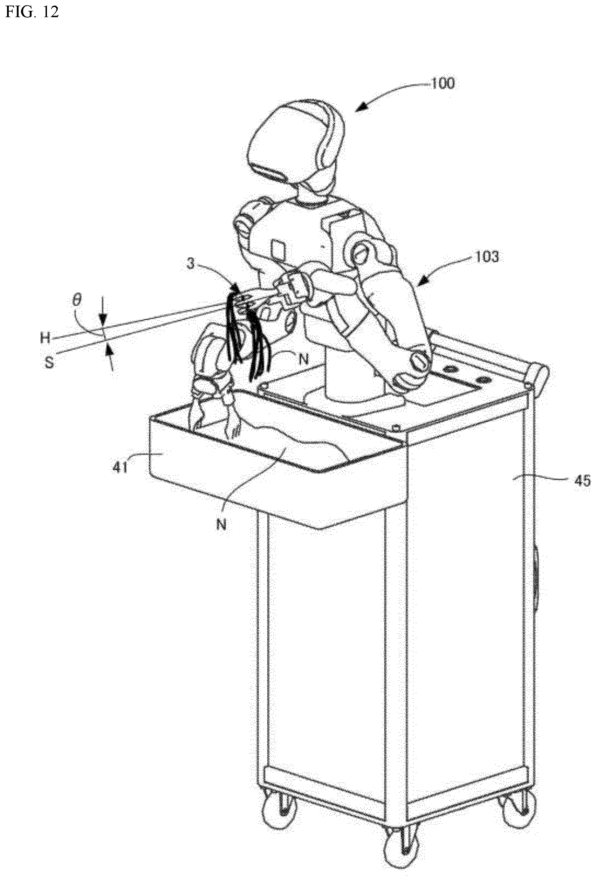

First, the first robot 100 captures an image of the noodle product N inside the container member 41 by the camera 105, and specifies a portion where the grasping members 32, 33 are inserted. For example, a depth can be calculated from the image of the noodle product N by the camera 105, and a portion at which a height of the noodle product N from the bottom surface of the container member 41 is the highest can be specified as the insertion portion. Next, as illustrated in Fig. 9, in a state in which the grasping members 32, 33 are separated from each other, the end effector 3 is rotated from an initial position to one side (hereinafter, referred to as a positive side) by a predetermined angle (for example, 90-180 degrees, hereinafter referred to as a first angle, and this movement is referred to as preliminary rotation). Then, as illustrated in Fig. 10, the end effector 3 is inserted into the noodle product N from this state. Subsequently, as illustrated in Fig. 11, the noodle product N is gripped by bringing the grasping members 32, 33 close to each other, and the end effector 3 is raised to a predetermined height. At this time, as illustrated in Fig. 12, the posture of the first arm member 103 is adjusted such that the rotation axis S of the end effector 3 is inclined by a predetermined inclination θ according to the noodle product N from a horizontal direction H. An inclination θ is, for example, preferably -80 degrees to +80 degrees, and more preferably -40 degrees to +45 degrees for many noodle products. As used herein, -45 degrees is, for example, an angle inclined downward by 45 degrees with respect to the horizontal direction H, and +45 degrees is an angle inclined upward by 45 degrees with respect to the horizontal direction H.

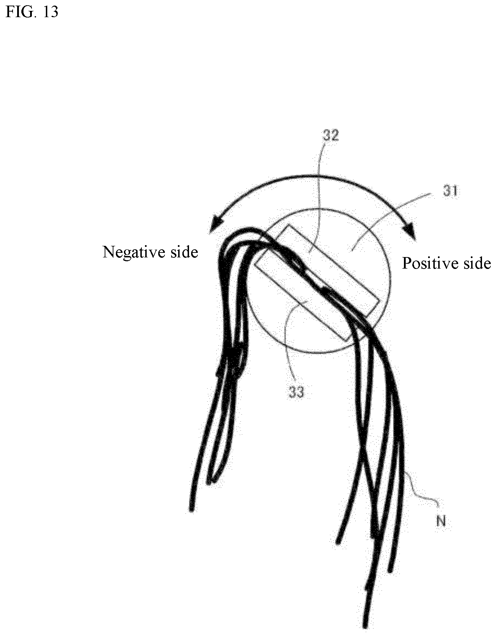

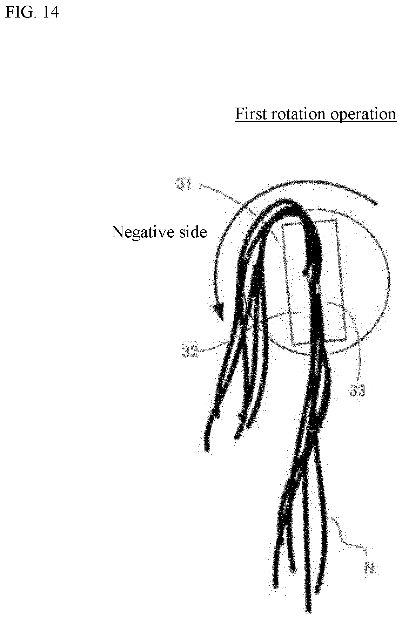

Next, the end effector 3 is rotated by an angle twice as large as the first angle to a side opposite to the positive side (hereinafter, referred to as a negative side) so as to change the state illustrated in Fig. 13 to the state illustrated in Fig. 14 (hereinafter, referred to as a first rotation operation). At this time, in the end effector 3, the noodle products N are hanging from the grasping members 32, 33 on the positive side and the negative side, but not all the noodle products N are grasped by the grasping members 32, 33, and some of the noodle products N are entangled with the noodle product N grasped by the grasping members 32, 33. Therefore, by rotating the end effector 3 toward the negative side, downward acceleration can be applied to the noodle product N hanging from the grasping members 32, 33 on the negative side, and the noodle product N entangled on the negative side can be shaken off.

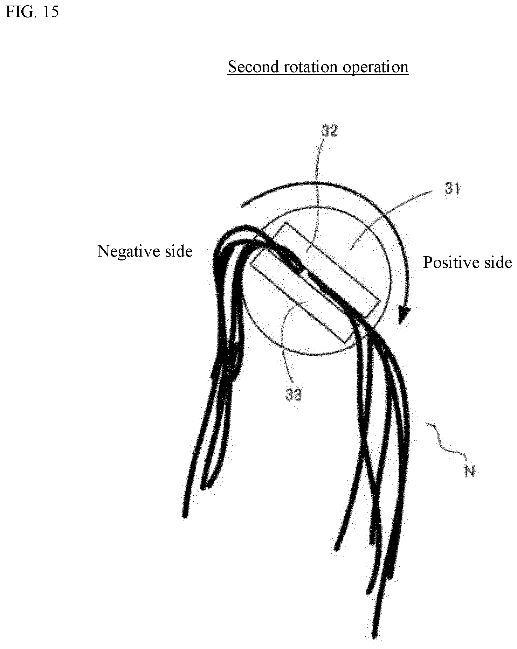

Subsequently, as illustrated in Fig. 15, the end effector 3 is rotated by an angle twice as large as the first angle to the positive side (hereinafter, referred to as a second rotation operation). As a result, downward acceleration can be applied to the noodle product N hanging from the grasping members 32, 33 on the positive side, and the noodle product N entangled on the positive side can be shaken off.

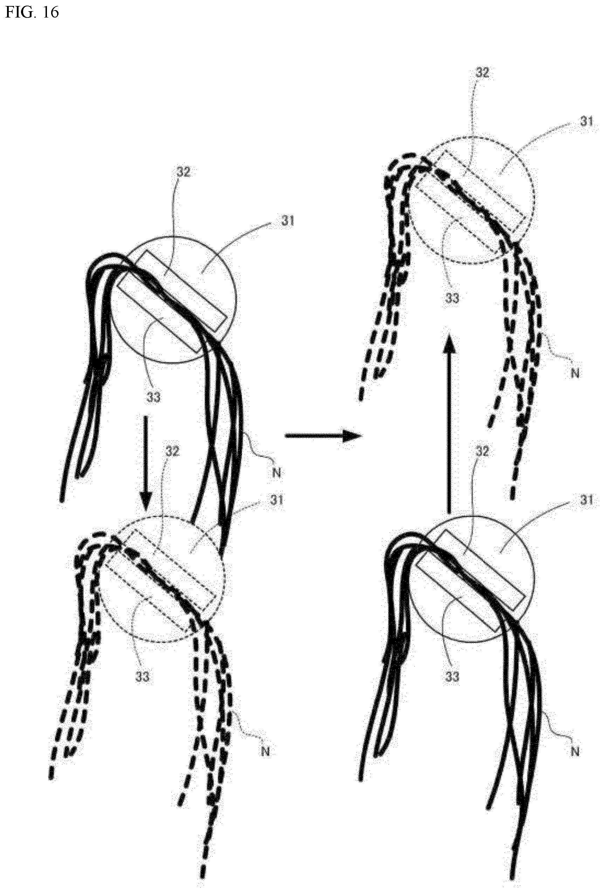

Thereafter, the end effector 3 is moved up and down to further shake off the entangled noodle product N (hereinafter, referred to as a vertical movement operation). For example, the end effector 3 is preferably moved up and down about 2 times to 3 times. At this time, as illustrated in Fig. 16, the end effector 3 is lowered by a predetermined distance from the initial position after the rotation operations described above, and then raised above the initial position. That is, in a step of raising the end effector 3, the end effector 3 is raised to a position higher than the uppermost point of the end effector 3 immediately before. As a result, acceleration acting on the noodle product N when the end effector 3 descends can be increased, and the entangled noodle product N can be further shaken off. An order in which the second rotation operation and the vertical movement operation are performed is not particularly limited, and the second rotation operation and the vertical movement operation may be performed in an opposite order or at the same time.

In this way, when the operation of shaking off of the noodle product N is completed, the end effector 3 is moved to the measuring conveyor. As described above, since the conveyance device 300 sequentially transmits information of the measuring conveyor on which the noodle product N is not placed among the first to seventh measuring conveyors 311-317 to the first robot 100, when it is detected, for example, that the noodle product N is not placed on one of the fifth to seventh measuring conveyors 315-317 allocated to the first arm member 103, the first robot 100 places the noodle product N from the measuring conveyor closest to the first robot 100 among the measuring conveyors 315-317 on which the noodle product N is not placed.

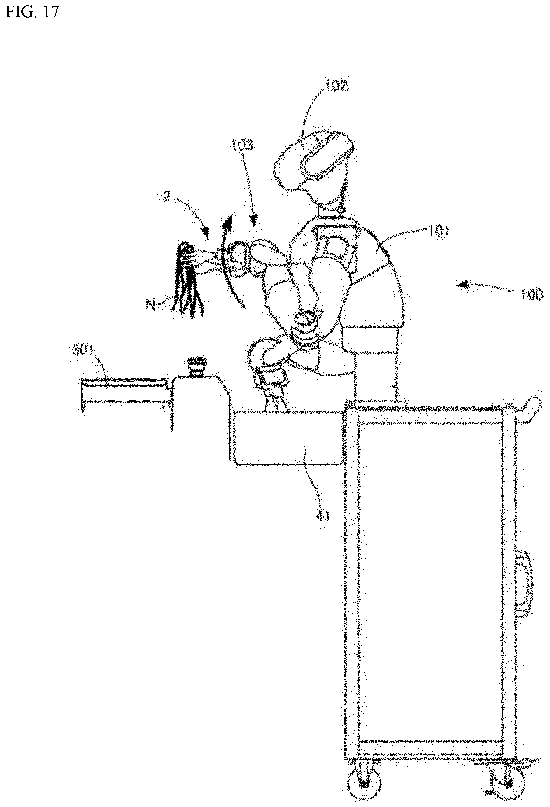

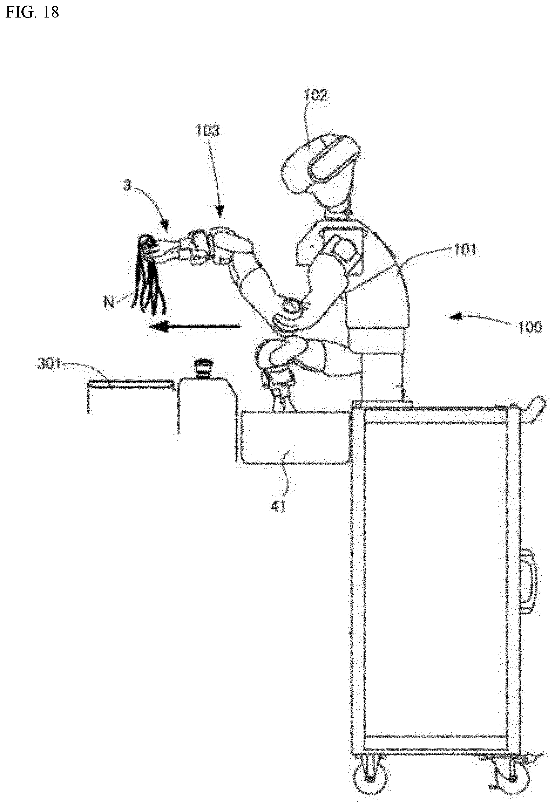

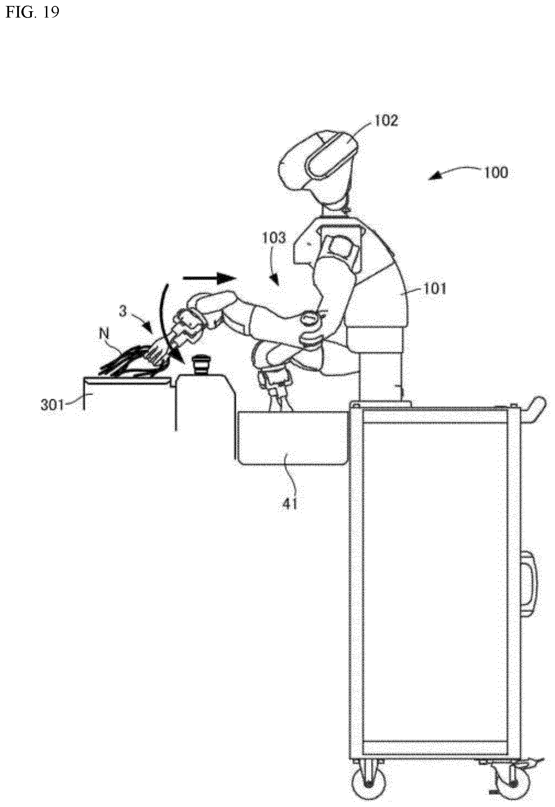

First, as illustrated in Fig. 17, the end effector 3 is turned upward. As a result, it is possible to suppress the noodle product hanging downward from the grasping members 32, 33 from interfering with the end portion of the conveyance device or the like. Next, the first arm member 103 is moved toward a side of a target measuring conveyor. As illustrated in Fig. 18, when the end effector 3 is positioned above the target measuring conveyor, the rotational position of the end effector 3 is adjusted such that the movement direction (approaching and separating direction) of the grasping members 32, 33 substantially coincides with the horizontal direction. Then, as illustrated in Fig. 19, while the end effector 3 is turned downward above the target measuring conveyor, the grasping members 32, 33 are moved apart near the lowest point, and the noodle product N is dropped on the measuring conveyor. At this time, when the end effector 3 is positioned above the vicinity of a front portion of the measuring conveyor (a side of transport conveyor) and is turned downward while the end effector 3 is slightly retracted backward from this position, the noodle product N can be placed on the measuring conveyor in a U shape.

When the noodle product N is thus placed on the measuring conveyor 315-317, the first arm member 103 is moved so that the end effector 3 moves above the container member 41, and the pickup movement of the next noodle product N is performed. The same movement as described above is also performed by the second arm member 104. That is, the second arm member 104 picks up the noodle product N from the container member 41 and places the noodle product N on one of the first to fourth measuring conveyors 311-314. In addition, the second robot 200 also performs the same movement, and picks up the noodle product N from the container member 42 to place the noodle product N on one of the measuring conveyors 321-327 of the second measuring conveyor group 302. The subsequent transport of the noodle product N is as described above.

When it is determined that the noodle product N placed on the measuring conveyor 311-317 is less than the reference range described above, the pickup movement can be performed additionally. That is, based on the weight of the noodle product N that has been measured, a lacking amount of the noodle product N is picked up from the container member 41 and is again placed on the target measuring conveyor. The method of picking up the noodle product N at this time is not particularly limited, and for example, the weight of the noodle product N to be picked up can be adjusted by making lengths of the grasping members 32, 33 to be inserted into the noodle product N in the container member 41 shorter than specified.

When the weight of the noodle product N on the measuring conveyor 311-317 exceeds the prescribed range, a part of the noodle product N placed on the measuring conveyor 311-317 can be picked up by the grasping members 32, 33 to reduce the weight of the noodle product N to be within the prescribed range. At this time, the second camera 106 provided on the head 102 of the first robot 103 captures an image of the noodle product N on the target measuring conveyor, and specifies a part where the noodle product N is to be picked up, in a manner similar to the above. Then, the lengths of insertion of the grasping members 32, 33 is adjusted based on the weight of the noodle product N that has been measured, and a part of the noodle product N is picked up. As a result, if it is determined that the weight of the noodle product N on the measuring conveyor is within the reference range, the noodle product N is transported to the first transport conveyor 33 as described above.

In addition, when the noodle product N placed on the measuring conveyor 311-317 is not within the reference range, the noodle product N can be collected. For example, it is possible to provide the collection lane extending in the front-rear direction between the first measuring conveyor group 301 and the container member 41, that is, on a side opposite of the first transport conveyor 33. When it is determined that the weight of the noodle product N is not within the reference range, the corresponding measuring conveyor 311-317 is driven to transport the noodle product N to the collection lane. The collected noodle product N can be contained in the container member 41. Alternatively, the collected noodle product can be discarded.

When an amount of the noodle products N in the container member 41 decreases, noodle products N can be directly replenished to the container member 41. In addition, since the container member 41 is provided between the conveyance device 300 and the first robot 100, the container member 41 can be moved in the front-rear direction. Therefore, when the amount of the noodle products N in the container member 41 decreases, the container member 41 can be moved to either side of the front-rear directions to place a replacement container member filled with noodle products N instead in front of the first robot 100 from the front-rear direction. At this time, if the container member 41 is operated to be pushed out in the front-rear direction by the replacement container member, the efficiency of replenishing the noodle product N can be further improved. In addition, in order to receive the noodle product N scattered at the time of pickup, an empty receiving container member can be disposed on at least one side of the front-rear directions of the container member 41.

### <3. Features>

In the noodle product pick-up system configured as described above, the following effects can be obtained.
(1) In the present embodiment, the first rotation operation, the second rotation operation, and the vertical movement operation are performed in the pickup operation, and thus the entangled noodle product N can be shaken off. Picked up noodle products N are moved to the measuring conveyors 311-317, 321-327, but in this process, the noodle product N that is not gripped by the grasping members 32, 33 and entangled may fall off. Therefore, by shaking off the entangled noodle product N before the placement operation as described above, it is possible to suppress the noodle product N from falling between the container member 41 and the measuring conveyor 311-317, 321-327. In addition, an appropriate amount of noodle product N can be placed on the measuring conveyor. Furthermore, it is possible to avoid a state in which the measuring conveyor cannot correctly complete the weighing movement when the entangled noodle product N falls during the placement operation and is disposed across the plurality of measuring conveyors.
(2) In the placement operation of the noodle product N, a gripping state of the grasping members 32, 33 is released while the end effector 3 is turned downward, but this enables the inertia acting on the noodle product N to be standardized, and the noodle products N can be accurately placed on the measuring conveyors 311-317, 321-327.
(3) In the present embodiment, since the noodle product N is placed from the measuring conveyor closest to the robot 100, the moving distance of the noodle product N can be shortened. This can reduce the risk of falling off of the noodle product N. In addition, the efficiency of placement of the noodle product N can be improved, and the working time can be shortened.
(4) In the present embodiment, the container member 41 is disposed in front of the first robot 100, and the measuring conveyor 311-317 is disposed in front of the container member. Therefore, if the arm member 103, 104 is moved forward after the first robot 100 picks up the noodle product N, the noodle product N can be placed on the measuring conveyor 311-317, so that the pickup operation and the placement operation can be performed without significantly changing the posture of the first robot 100 including the arm members 103,104. Therefore, the pickup movement of the noodle product N can be efficiently performed, and the operation time can be shortened. In addition, since the container member 41 is disposed in front of the first robot 100, the noodle product N in the container member 41 can be imaged while the first camera 105 of the first robot 100 is fixed. Therefore, also in this respect, the pickup movement of the noodle product N can be efficiently performed.

### <4. Modifications>

Although one embodiment of the present invention has been described above, the present invention is not limited to the above embodiment, and various modifications can be made without departing from the gist thereof. The following modifications can be appropriately combined. Although either one of the robots or either one of the arm members will be described below, the description is also applicable to the other robot or the other arm member unless otherwise specified.
(1) In the above embodiment, the robot 100 including the arm members 103, 104 having a multiple joint of 7 degrees of freedom has been described, but the configuration of the robot 100 is not particularly limited. That is, the configuration of the arm members 103, 104 is not particularly limited as long as the pickup movement of the noodle product N as described above can be performed, and the arm member may have a multiple joint of having other than 7 degrees of freedom. In addition, the number of robots is not particularly limited.
(2) In the above embodiment, in the pickup operation, in order to shake off the noodle product N, the grasping members are inserted into the noodle products in the state in which the end effector 3 is previously rotated from the initial position to the positive side before the first rotation operation is performed, but the first rotation operation can be performed without performing the preliminary operation.
(3) In the above embodiment, in the pickup operation, in order to shake off the noodle product N, the first rotation operation, the second rotation operation, and the vertical movement operation are performed, but the entangled noodle product N can be shaken off as long as at least the first rotation operation is performed. Therefore, the second rotation operation and the vertical movement operation are not necessarily required, and at least one of the second rotation operation and the vertical movement operation can be added as necessary. The rotation angle in each rotation operation is not particularly limited.
(4) The placement operation the noodle product N is not particularly limited, and may be other than those described in the above embodiment. That is, as long as the grasped noodle products N can be placed on the measuring conveyors 311 to 317, and 321 to 327, the placement operation of the noodle products N can be appropriately set.
(5) In the above embodiment, the first arm member 103 of the first robot 100 is set so as to place the noodle products N on the fifth to seventh measuring conveyors 315-317, and the second arm member 104 is set so as to place the noodle products N on the first to fourth measuring conveyors 311-314, but other settings may be used. For example, in some of the measuring conveyors, it can be set so that the noodle products N can be placed by either of the first arm member 103 and the second arm member 104. Accordingly, the efficiency of the placement of the noodle products N can be improved. Such a measuring conveyor is appropriately disposed in the vicinity of the first robot 100, and for example, can be set so that the noodle product N can be placed by either of the first arm member 103 and the second arm member 104 on the fourth measuring conveyor 314.
(6) The configuration of the robot 100 is not particularly limited, and the trunk 101 and the head 102 may not be clearly distinguished, and at least the arm members 103,104 may be provided. In addition, the positions of the cameras 105,106 are not particularly limited, and the cameras may only capture an image of the container member 41 unless the operation of picking up a part of the noodle products N whose weight exceeds the reference range is not performed. Alternatively, a position of the noodle product N to be picked up in the container member 41 can be calculated using various sensors other than the camera. Further, the number of arm members is not particularly limited, and may be one or three or more.
(7) In the above embodiment, the measuring conveyors 311-317, 321-327 on which the noodle product N is not placed are detected by a signal from the conveyance device 300, but this can also be detected by, for example, a camera of the robot 100.
(8) In the above embodiment, the noodle product N is placed from one of the measuring conveyors 311-317, 321-327 closest to the robot 100, but the present invention is not limited thereto. That is, the noodle product N can be placed in a place on a measuring conveyor other than the measuring conveyor closest to the robot 100.
(9) The configuration of the conveyance device 300 is not particularly limited, and other configurations can be appropriately added as necessary as long as at least the noodle product is conveyed. For example, in the above embodiment, the noodle product N is placed on the measuring conveyor, but the present invention is not limited thereto. For example, any measuring unit capable of measuring the weight of the noodle product N may be used, and the measuring unit may not be a conveyor. Therefore, for example, the noodle product N can be placed on a tray or a measuring cup that can measure the weight. Further, after the weighing, the tray can be inclined to supply the noodle to the transport conveyor. In addition, a device having only a weighing function without a conveying function may be used.
(10) In the above embodiment, the robots 100, 200 are combined with the conveyance device 300, but a device to be combined with the robots 100, 200 is not particularly limited, and the robot can be used alone. That is, the robot 100 can be configured to pick up the noodle product N and place the noodle product N at a predetermined position such as a tray.
(11) In the above embodiment, the robot is applied to the pick-up of the noodle product N, but the present invention is not limited thereto, and the present invention can be used for, in addition to the noodle product, flexible elongate members in general, examples of which include foods such as bean sprouts and gourd, electric components such as cords, and yarns and strings. Note that the elongate members include string-like members, thin piece members, and bar-shaped members, and at least a part thereof may be hard.
(12) In the above embodiment, the control device supplies the noodle product N from the first transport conveyor 33 to the second transport conveyor 34 at predetermined time intervals, but the present invention is not limited thereto. The measuring conveyors 311-317, 321-327 may be driven at arbitrary timing to convey the corresponding noodle products N to the first transport conveyor 33, and the second transport conveyor 34 may be driven so that the noodle products N transported from the first transport conveyor 33 is carried into the tray 341.
(13) In the above embodiment (paragraph 0029), the control device 36 drives the measuring conveyors 311-317, 321-327 on each of which an appropriate amount of the noodle product N in the reference range is placed at a predetermined timing to transport the noodle products N onto the first transport conveyor 33, but the present invention is not limited thereto. A combination calculation may be performed based on the measured values of the steering products N, a combination of a plurality of measuring conveyors whose weight is equal to or greater than a predetermined target weight and closest to the target weight may be selected, the selected measuring conveyors may be driven at a predetermined timing, and the noodle product N may be transported so as to be placed at the same position on the first transport conveyor 33. Reference Signs List

100 First robot
103 First arm member
104 Second arm member
200 Second robot
300 Conveyance device (measuring device)

## Claims

1. A robot configured to grasp an elongate member, the robot comprising:
a robot body;
at least one arm member movable with respect to the robot body; and
a control unit that controls a movement of the arm member, wherein
the arm member includes:
a grasping unit that grasps the elongate member; and
an arm body that supports the grasping unit, the arm body having a plurality of joints,
the grasping unit includes:
a support portion disposed at a distal end of the arm body, the support portion being rotatable about a rotation axis; and
a pair of grasping members attached to the support portion, the grasping members being movable closer to and away from each other with the rotation axis interposed therebetween, and
the control unit causes the robot to execute:
a grasping step for inserting the grasping members into a lamination of the elongate members that have been stored, and for grasping the elongate member;
a lifting step for lifting the grasping unit in a state in which the elongated member is grasped by the grasping members; and
a first rotation step for rotating the grasping unit by a prescribed angle in a first direction about the rotation axis either during or after the lifting step.

2. The robot according to claim 1, wherein
the control unit further causes the robot to execute:
a second rotation step for rotating the grasping unit by a prescribed angle in a second direction about the rotation axis after the first rotation step, the second rotation direction being opposite to the first direction.

3. The robot according to claim 1 or 2, wherein
the control unit further causes the robot to execute:
a vertical movement step for causing the grasping unit to reciprocate at least once in a vertical direction after the lifting step.

4. The robot according to claim 3, wherein
in the vertical movement step, the grasping members are disposed at a position higher than an initial position during when the grasping unit is lifted after being lowered from the initial position.

5. The robot according to any one of claims 1 to 4, wherein
the first rotation step is carried out in a state where a posture of the grasping unit is held such that the rotation axis is inclined with respect to a horizontal direction.

6. The robot according to any one of claims 1 to 4, further comprising:
a step for driving the arm body, in a state where the elongated member is grasped by the grasping members, to move the grasping unit to a predetermined position, and then releasing the grasping state by the grasping members.

7. An elongate member pick-up system comprising:
the robot according to claim 6; and
a measuring device, wherein
the measuring device includes at least one measuring unit having the predetermined position,
the measuring unit is driven and the elongate member is conveyed when a weight of the elongate member placed at the predetermined position of the measuring unit is in a predetermined range.
